# EUROPÄISCHE PATENTANMELDUNG

(11) **EP 2 811 237 A1**
(43) Veröffentlichungstag der Anmeldung: **10.12.2014**
(21) Anmeldenummer: 13170947.9
(22) Anmeldetag: 06.06.2013
(51) Int. Cl.: F24J 2/20

(54) **Solarmodul sowie Herstellungsverfahren hierzu**

(71) Anmelder: Sika Technology AG, 6340 Baar (CH)
(72) Erfinder: Die Erfindernennung liegt noch nicht vor
(74) Vertreter: Sika Patent Attorneys

(57) **Zusammenfassung**

Die vorliegende Erfindung betrifft ein Solarpanel (10, 110), mit wenigstens einer ersten wärmeleitenden Platte (20), die für die Bestrahlung mit Sonnenstrahlen vorgesehen ist, und mit wenigstens einer zweiten Platte (30), wobei die Platten (20, 30) mittels wenigstens eines Klebstoffes (40) derart verbunden werden, dass der Klebstoff zwischen den beiden Platten wenigstens einen Kanal (50) für ein zwischen den Platten (20, 30) strömendes Wärmeträgermedium ausbildet und wobei Klebstoffdimensionierung derart beschaffen und ausgelegt ist, dass sie dauerhaft einer Druckbelastung von mehr als etwa 0,5 bar im Solarpanel (10, 110) standhalten kann.

Des Weiteren betrifft die vorliegende Erfindung eine Solarpanel-Installation, ein Herstellungsverfahren für ein Solarpanel (10, 110) sowie die Verwendung eines Klebstoffes zur Herstellung eines Solarpanels (10, 110).

## Beschreibung

### Technisches Gebiet

Die vorliegende Erfindung betrifft ein Solarpanel, eine Solarpanel-Installation, ein Herstellungsverfahren für ein Solarpanel sowie die Verwendung eines Klebstoffes zur Herstellung eines Solarpanels.

### Stand der Technik

Aus dem Stand der Technik sind bereits Solarpanels sowie entsprechende Herstellungsverfahren bekannt.

Aus der GB 2 072 323 A ist beispielsweise ein Solarpanel bekannt, bei dem zwei wärmeleitende Platten mittels eines Klebstoffes derart verbunden werden, dass der Klebstoff zwischen den beiden planen Platten Kanäle für ein zwischen den Platten strömendes Wärmeträgermedium ausbildet.

Dieses Panel aus der GB 2 072 323 A weist jedoch noch erhebliche Nachteile auf und kann nur bis zu einem gewissen, nach derzeitigen Maßstäben nicht mehr ausreichenden Wirkungsgrad betrieben werden. Denn das Wärmeträgermedium muss mit einem erhöhten Druck das Solarpanel durchströmen, was eine erhöhte Belastung für den Klebstoff bedeutet. Der Klebstoff ist hier 40-fach dimensioniert, was nicht unproblematisch ist. Ferner sind Abstandshalter vorgesehen, die jedoch potentielle Leckstellen darstellen. Ferner ist die Verträglichkeit der Wärmeträgerflüssigkeit mit dem Klebstoff nicht ausreichend geklärt. Der Klebstoff ist hier in einem ständigen Kontakt mit der Wärmeträgerflüssigkeit und massiven Belastungen, die aufgrund der Wärmeausdehnung und dem Druck der Wärmeträgerflüssigkeit auftreten, ausgesetzt. Das kann jedoch nicht bzw. nicht auf die Dauer mit einem gewöhnlichen Silikonmaterial, wie im Stand der Technik beschrieben, erfolgreich hergestellt und betrieben werden.

Es ist daher die Aufgabe der vorliegenden Erfindung, ein Solarpanel, eine Solarpanel-Installation, ein Herstellungsverfahren für ein Solarpanel sowie die Verwendung eines Klebstoffes zur Herstellung eines Solarpanels in vorteilhafter Weise weiterzubilden, insbesondere dahingehend, dass ein Solarpanel einfacher und kostengünstiger hergestellt werden kann und dass die Zuverlässigkeit und Haltbarkeit aber auch der Wirkungsgrad des Solarpanels verbessert werden kann.

### Darstellung der Erfindung

Diese Aufgabe wird erfindungsgemäß gelöst durch ein Solarpanel mit den Merkmalen des Anspruchs 1. Danach ist vorgesehen, dass ein Solarpanel bereitgestellt wird mit wenigstens einer ersten wärmeleitenden Platte, die für die Bestrahlung mit Sonnenstrahlen vorgesehen ist, und mit wenigstens einer zweiten Platte, wobei die Platten mittels wenigstens eines Klebstoffes derart verbunden werden, dass der Klebstoff zwischen den beiden Platten wenigstens einen Kanal für ein zwischen den Platten strömendes Wärmeträgermedium ausbildet und wobei Klebstoffdimensionierung derart beschaffen und ausgelegt ist, dass sie dauerhaft einer Druckbelastung von mehr als etwa 0,5 bar im Solarpanel standhalten kann.

Ein Solarpanel kann ein Photovoltaikpanel unter Anderem zur Erzeugung von elektrischem Strom und/oder ein Solarthermiemodul insbesondere zur Wärmegewinnung sein.

Dadurch ergibt sich insbesondere der Vorteil, dass ein Solarpanel einfacher und kostengünstiger hergestellt werden kann und dass die Zuverlässigkeit und Haltbarkeit aber auch der Wirkungsgrad des Solarpanels verbessert werden kann.

Durch den Umstand, dass die Klebstoffdimensionierung derart beschaffen und ausgelegt ist, dass sie dauerhaft einer Druckbelastung von mehr als etwa 0,5 bar im Solarpanel standhalten kann, wird vorteilhafterweise erreicht, dass das Solarpanel mit einem Wärmeträgermedium effizienter im Vergleich zu bisher bekannten Lösungen durchströmt werden kann, so dass die erste Platte, die der Sonneneinstrahlung ausgesetzt ist, gekühlt werden kann bzw. von dieser Platte Wärme abgeführt werden kann. Insbesondere dann, wenn die erste Platte z.B. eine Photovoltaikbeschichtung oder ein Photovoltaikelement trägt bzw. aufweist, kann die Energiegewinnung durch die Kühlung der ersten Platte erheblich gesteigert werden.

Ein weiterer Vorteil eines derartigen Solarpanels ist, dass die durch das Solarpanel hindurchgeleitete Wärmeträgerflüssigkeit direkt an der warmen Oberfläche, d.h. der ersten Platte, die ja der Sonneneinstrahlung ausgesetzt ist, die Wärme abführen kann. Diese Wärme muss folglich nicht erst über leitende Materialien wie Metallfolien oder Röhren oder dergleichen an die Wärmeträgerflüssigkeit abgegeben werden. Andererseits wird der Klebstoff zu einem Teil des Leitungssystems und muss dem darin herrschenden Druck und Temperaturverhältnissen gewachsen sein, da der Klebstoff und die Wärmeträgerflüssigkeit in ständigem direkten Kontakt stehen, was nunmehr erfindungsgemäße vorteilhafterweise der Fall ist.

Die Wärmeträgerflüssigkeit kann beispielsweise Wasser oder ein Wassergemisch z.B. bestehend zumindest aus Wasser und Glykol sein.

Denkbar ist aber auch, dass die Wärmeträgerflüssigkeit eine Wärmeträgerflüssigkeit auf Silikonölbasis ist bzw. ein Silikonöl ist oder umfasst.

Mögliche derartige Wärmeträgerflüssigkeiten weisen dabei insbesondere eine kinematische Viskosität in einem Bereich von 0,5 mm²/s bis 100 mm²/s bei 25°C auf. Vorzugsweise wird eine kinematische Viskosität in einem Bereich von 0,65 mm²/s bis 20 mm²/s bei 25°C, vorteilhafterweise zwischen 1 mm²/s bis 20 mm²/s bei 25°C, besonders bevorzugt bei etwa 10 mm²/s bei 25°C (Beispiel Solarfluid ISS AK 10, siehe nachstehende Tabelle).

Mögliche derzeit erhältliche Beispiele für derartige Wärmeträgermedien, sogenannte Solarfluide auf Silikonölbasis, sind in nachstehender Tabelle aufgeführt:

| Produkt | Viskosität bei 25°C kinematisch | Dichte bei 25° C | Wärmeausdehnungskoefizient von 0-150°C | Wärmeleitfähigkeit bei 50°C | Flammpunkt DIN ISO 2592 | Stockpunkt |
|---|---|---|---|---|---|---|
| | **mm2/s** | **g/cm³** | **cm³/(cm³*oC)*10-4** | **W*K-1*m-1** | **°C** | **°C** |
| AK 0,65 | 0,65 | 0,76 | - | 0,1 | -1 | -68 |
| AK10 | 10 | 0,93 | 10 | 0,13 | >165 | <-80 |
| AK 20 | 20 | 0,945 | 9,7 | 0,14 | > 230 | <-70 |
| AK 35 | 35 | 0,955 | 9,5 | 0,14 | >235 | <-60 |
| AK 50 | 50 | 0,96 | 9,5 | 0,15 | >250 | -55 |
| AK 100 | 100 | 0,963 | 9,4 | 0,15 | >275 | -55 |

Denkbar ist auch, als Wärmeträgermedium ein Solarfluid mit den folgenden Eigenschaften zu verwenden:
Einsatztemperatur: -70 bis + 250°C
Wärmeleitfähigkeit: von 0.13 bis 0.05 W /m K (immer in Bezug auf Tiefst- resp. Höchsttemperatur)
Spezifische Wärme: von 1.5 bis 2.3 KJ/kg K
Viskosität: 16 bis 0.2 mPa

Ein Beispiel für ein derartiges Wärmeträgermedium ist das Solarfluid ISS HF 07 (Silikonöl).

Die Viskosität wird mit einem thermostatisierten Kegel-Platten-Viskosimeter Physica UM (Kegeldurchmesser 20 mm, Kegelwinkel 1°, Kegelspitze-PlattenAbstand 0,05 mm, Schergeschwindigkeit 10 bis 1000 s⁻¹) gemessen.

Der Klebstoff wird insbesondere direkt auf die Platte, die von der Sonne erwärmt bzw. aufgeheizt wird bzw. werden soll, aufgebracht. Insbesondere wird der Klebstoff vor dem Fügen der Teile auf der Rückseite der Platte aufgetragen oder auf der Vorderseite des Rückseitenbleches. Die erforderliche Klebstoffdicke kann durch Abstandhalter oder allein durch die Thixotropie des Klebstoffes erreicht werden.

Die erste Platte kann beispielsweise ein Thermieblech oder ein Photovoltaikelement bzw. Photovoltaik-Modul sein. Der Klebstoff bildet dabei, in Verbindung mit der zweiten Platte, das auch Rückseitenblech genannt werden und z.B. ein Blech, eine Kunststoffplatte, ein Glas oder dergleichen sein kann, Kanäle, die die bestmögliche Wärmeabführung ermöglichen. Die Kanalstruktur kann linienförmig einfach, oder mehrfach mäandrierend oder linienförmig als einfach oder mehrfach "Harfe" oder auch in unterbrochenen Linien erfolgen. Das System ist aber in jedem Fall (mit Ausnahme von dem Anschluss bzw. den Anschlüssen) rundum abgeschlossen und abgedichtet. Die Wärmeträgerflüssigkeit tritt an einem oder mehreren Orten ein und durchfliesst bzw. überströmt bis zu ihrem Austritt möglichst optimal die gesamte Modulfläche bzw. die Fläche der ersten Platte. Die zweite Platte bzw. das Rückseitenblech kann beispielsweise glatt oder bereits kanalförmig geprägt sein. Der Klebstoff bildet die Kanäle im Inneren wie auch die Abdichtung des gesamten Moduls, auch ist er für den Zusammenhalt der beiden zu verbindenden Fläche verantwortlich.

Des Weiteren kann vorgesehen sein, dass die Druckbelastung größer als etwa 1,0 bar, insbesondere bis zu wenigstens etwa 2,0 bar beträgt. Folglich ist dann vorteilhafterweise vorgesehen, dass die Klebstoffdimensionierung derart beschaffen und ausgelegt ist, dass sie dauerhaft einer Druckbelastung von mehr als etwa 1,0 bar, bzw. etwa 2,0 bar im Solarpanel standhalten kann.

Außerdem kann vorgesehen sein, dass der Klebstoff eine Zugfestigkeit von mindestens etwa 1,0 N/mm² (gemessen nach ISO 527 - Ausgabe 1996-04), weiter beispielsweise eine Zugfestigkeit von mindestens etwa 2,0 N/mm² (gemessen nach ISO 527 - Ausgabe 1996-04), insbesondere eine Zugfestigkeit von mindestens etwa 2,1 N/mm² (gemessen nach ISO 527 - Ausgabe 1996-04), vorzugsweise eine Zugfestigkeit von mindestens etwa 2,2 N/mm² (gemessen nach ISO 527 - Ausgabe 1996-04), besonders vorteilhafterweise eine Zugfestigkeit von mindestens etwa 2,3 N/mm² (gemessen nach ISO 527 - Ausgabe 1996-04) aufweist.

Darüber hinaus ist denkbar, dass der Klebstoff eine Reißdehnung von mindestens etwa 100 % (gemessen nach ISO 37 - Ausgabe 2011-12), vorzugsweise von mindestens 140 % (gemessen nach ISO 37 - Ausgabe 2011-12) aufweist.

Weiter ist möglich, dass der Klebstoff eine permanente Wärmebeständigkeit von mindestens etwa 150°C, vorzugsweise von mindestens etwa 180°C und/oder einen Einsatztemperaturbereich im Bereich von etwa -50° bis etwa 200°C, vorzugsweise von etwa -40°C bis etwa 150°C hat.

Vorzugsweise weist der Klebstoff mit der Wärmeträgerflüssigkeit auf lange Sicht eine gute Kompatibilität auf, wobei der Klebstoff bei ständigem Kontakt mit der Wärmeträgerflüssigkeit bei Temperaturen von -40°C bis +150°C einen Festigkeitsverlust auf max. 80% seiner Festigkeit erleidet.

Der Klebstoff kann beispielsweise ein Einkomponenten-Klebstoff, ein Zweikomponenten-Klebstoff, ein MS-Klebstoff, ein Hybrid-Klebstoff, ein PUR-Klebstoff oder ein PUR-Hybrid-Klebstoff, ein Acrylat- oder UV-härtender Klebstoff sein.

Mögliche derzeit verfügbare Klebstoffe sind beispielsweise Sikasil oder Sikaflex ISS Klebstoffe. Diese Klebstoffe bzw. geeignete Klebstoffe halten einer kurzfristigen Druckbelastung von etwa 6 bar stand und einer langfristigen Druckbelastung von etwa 2 bar stand. Die Betriebstemperatur dieser Klebstoffe kann beispielsweise im Bereich zwischen etwa -40°C bis +110°C ungedämmt respektive bis etwa 150°C gedämmt z.B. mit Isolierung liegen. Vorzugsweise ist der Klebstoff für einen ständigen Kontakt mit dem Wärmeträgermedium, z.B. einem Glykol-Wassergemisch (z.B. mit einem Gefrierpunkt von < -50°C) geeignet. Die Dauerfestigkeit sollte bei max. 110°C mindestens 0,4 N/mm² und die Elastizität bei -20°C mindestens 50% Bruchdehnung betragen. Der Klebstoff sollte möglichst keiner UV-Belastung ausgesetzt sein.

Die Dimensionierung der Klebstoffe kann zwischen eine Klebstoffbreite zwischen etwa 5 mm für eine Kanalbreite von etwa 10 mm und bis zu 10 mm Klebstoffbreite für eine Kanalbreite von etwa 40 mm liegen.

Das Verhältnis der Klebstoffbreite zur Kanalbreite kann im Verhältnis von 1:1 bis 1:4 gewählt werden, wenn der Betriebsdruck z.B. im Bereich von etwa 2 bar gewählt ist. Bei geringeren Betriebsdrücken kann eine entsprechende, im Wesentlichen lineare Anpassung des Verhältnisses Verhältnis der Klebstoffbreite zur Kanalbreite erfolgen.

Der Kanalquerschnitt Breite zu Dicke kann im Verhältnis von 1:1 bis 5:1 gewählt werden, wenn der Betriebsdruck z.B. im Bereich von etwa 2 bar gewählt ist.

Die Konstruktion der Randversiegelung kann dergestalt sein, dass eine einfache Klebstoffraupe hierfür vorgesehen ist. Denkbar ist aber auch, dass eine rundumlaufende Sekundärversiegelung vorgesehen ist oder ein rundumlaufender Abstandhalter analog eine Isolierglas. Der Modulaufbau kann lichtundurchlässig sein, etwa eine Glas-Glas-Konstruktion mit Rückseitenbeschichtung.

Es ist möglich und bevorzugt, dass der Klebstoff ein Klebstoff auf Silikonbasis ist, wobei der Klebstoff insbesondere ein hochfestes Silikon aufweist.

Vorteilhafterweise kann in Kombination mit einem Klebstoff auf Silikonbasis als Wärmeträgermedium ein Wärmeträgermedium auf Silikonölbasis bzw. ein Silikonöl gewählt werden. Diese Kombination ist insbesondere deshalb vorteilhaft, weil das Silikonöl und der Silikonklebstoff gut miteinander verträglich sind. Dies führt zu einer höheren Lebensdauer und erlaubt höhere Belastungen. Auch ist es in diesem Falle nicht zwangsläufig erforderlich, einen UV-Schutz für den Klebstoff vorzusehen.

Insbesondere kann vorgesehen sein, dass der Klebstoff ein 2-komponentiger Silikon-Klebstoff ist, insbesondere ein 2-komponentiger hochmoduliger Silikon-Klebstoff ist.

Ein hochmoduliger Klebstoff ist dabei ein Klebstoff, der eine vergleichsweise hohe Zugfestigkeit aufweist, d.h. ein hohes Elastizitätsmodul aufweist.

Ein Beispiel für einen derartigen 2-komponentiger, hochmoduliger Silicon-Klebstoff ist z.B. Sikasil WT-480, ein 2-komponentiger, hochmoduliger Silicon-Klebstoff, der innerhalb kürzester Zeit eine mechanische Festigkeit und Haftung aufbaut. Der Härtungsmechanismus ist bei derartigen Klebstoffen Polykondensations-Härtungsmechanismus. Ferner weist ein derartiger Klebstoff eine Alkoxy-Vernetzungsart auf. Des Weiteren hat dieser Klebstoff eine Härte von etwa 60 Shore A (gemessen nach ISO 868 - Ausgabe 2003-10), eine Zugfestigkeit von etwa 2.5 N/mm² (gemessen nach ISO 37 - Ausgabe 2011-12), eine Reißdehnung von etwa 140 % (gemessen nach ISO 37 - Ausgabe 2011-12), eine Spannung bei 100 % Dehnung von etwa 2.0 N/mm² (gemessen nach ISO 37 - Ausgabe 2011-12), eine Spannung bei 12,5 % Dehnung von etwa 0.5 N/mm² (gemessen nach ISO 37 - Ausgabe 2011-12), eine zulässige Bewegungsaufnahme von ± 12.5 % (ASTM C 719), eine permanente Wärmebeständigkeit von etwa 180°C und einen Einsatztemperaturbereich von -40 °C - 150 °C.

Ein Beispiel für einen derartigen 2-komponentiger, hochmoduliger Silicon-Klebstoff ist z.B. Sikasil AS-785, ein 2-komponentiger, hochmoduliger Silicon-Klebstoff, der innerhalb kürzester Zeit eine mechanische Festigkeit und Haftung aufbaut. Der Härtungsmechanismus ist bei derartigen Klebstoffen Polykondensations-Härtungsmechanismus. Dieser Klebstoff weist eine neutrale Vernetzungsart auf. Des Weiteren hat dieser Klebstoff eine Härte von etwa 45 Shore A (gemessen nach ISO 868 - Ausgabe 2003-10), eine Zugfestigkeit von etwa 2.3 N/mm² (gemessen nach ISO 37 - Ausgabe 2011-12), eine Reißdehnung von etwa 250 % (gemessen nach ISO 37 - Ausgabe 2011-12), eine zulässige Bewegungsaufnahme von ± 25 % (ASTM C 719), eine permanente Wärmebeständigkeit von etwa 180°C und einen Einsatztemperaturbereich von -40 °C - 150 °C.

Auch ist denkbar, dass der Klebstoff ein 1-komponentiger, hochmoduliger Silikon-Klebstoff ist.

Ein Beispiel für einen derartigen 1-komponentiger, hochmoduliger Silicon-Klebstoff ist z.B. Sikasil AS-70, ein 1-komponentiger, hochmoduliger Silicon-Klebstoff, der innerhalb kürzester Zeit eine mechanische Festigkeit und Haftung aufbaut. Der Härtungsmechanismus ist bei derartigen Klebstoffen feuchtigkeitshärtend und die Art der Aushärtung ist neutral.

Des Weiteren hat dieser Klebstoff eine Härte von etwa 39 Shore A (gemessen nach ISO 868 - Ausgabe 2003-10), eine Zugfestigkeit von etwa 2.4 N/mm² (gemessen nach ISO 527 - Ausgabe 1996-04), eine Reißdehnung von etwa 500 % (gemessen nach ISO 527 - Ausgabe 1996-04), eine zulässige Bewegungsaufnahme von ± 25 % (ASTM C 719), eine permanente Wärmebeständigkeit von etwa 180°C und eine Servicetemperaturbereich von - 40 °C - 150 °C.

Die Shore-Härte ist ein Werkstoffkennwert für Elastomere und Kunststoffe und ist in den Normen DIN 53505 und DIN 7868 bzw. ISO 868 festgelegt. Das Kernstück des Shore-Härte-Prüfers besteht aus einem federbelasteten Stift aus gehärtetem Stahl. Dessen Eindringtiefe in das zu prüfende Material ist ein Maß für die Shore-Härte, die auf einer Skala von 0 Shore (2,5 Millimeter Eindringtiefe) bis 100 Shore (0 Millimeter Eindringtiefe) gemessen wird. Eine hohe Zahl bedeutet eine große Härte. Bei einem Shore-Härteprüfgerät ist eine Zusatzeinrichtung einsetzbar, die die zu messende Probe mit einer Kraft von 12,5 Newton bei Shore-A, bzw. 50 Newton bei Shore-D auf den Messtisch andrückt. Bei der Bestimmung der Shore-Härte spielt die Temperatur eine höhere Rolle als bei der Härtebestimmung metallischer Werkstoffe. Deshalb wird hier die Solltemperatur von 23 °C auf das Temperaturintervall von ± 2 K beschränkt. Die Materialdicke sollte mindestens 6 Millimeter betragen. Die Härte des Gummis wird durch die Vernetzung (schwach vernetzt = Weichgummi, stark vernetzt = Hartgummi) bestimmt. Aber auch der Gehalt an Füllstoffen ist für die Härte eines Gummiartikels ausschlaggebend.

Darüber hinaus ist vorgesehen, dass das Solarpanel ein kombiniertes Photovoltaik und Solarthermie Solarpanel ist. Hierdurch ergibt sich der Vorteil, dass ein höherer Ausnützungsgrad der Sonnenenergie erreicht werden kann, indem der Wirkungsgrad eines Photovoltaikmoduls durch Kühlung erhöht wird und/oder auf derselben Fläche zusätzlich zum (elektrischen) Energiegewinn Wärme gewonnen werden kann.

Es kann vorgesehen sein, dass die erste Platte eine Floatglasoberfläche und/oder eine Wärmeeintrags-Beschichtung aufweist. Es kann sich um Floatglas mit oder ohne Beschichtung handeln.

Insbesondere ist möglich, dass die erste Platte eine Beschichtung aufweist, die derart beschaffen ist, dass der Klebstoff nach der Montage nicht bzw. im Wesentlichen nicht UV-Strahlung ausgesetzt ist.

Ferner ist denkbar, dass der Klebstoff eine Dicke von etwa 0,01 bis etwa 10 mm aufweist.

Des Weiteren betrifft die vorliegende Erfindung eine Solarpanel-Installation mit den Merkmalen des Anspruchs 12. Danach ist vorgesehen, dass eine Solarpanel-Installation gebildet wird mit wenigstens zwei Solarpanels nach einem der Ansprüche 1 bis 11.

Darüber hinaus betrifft die vorliegende Erfindung ein Herstellungsverfahren mit den Merkmalen des Anspruchs 13. Danach ist vorgesehen, dass ein Solarpanel hergestellt wird mit wenigstens einer ersten wärmeleitenden Platte, die für die Bestrahlung mit Sonnenstrahlen vorgesehen ist, und mit wenigstens einer zweiten Platte, wobei die Platten mittels wenigstens eines Klebstoffes derart verbunden werden, dass der Klebstoff zwischen den beiden Platten wenigstens einen Kanal für ein zwischen den Platten strömendes Wärmeträgermedium ausbildet und wobei Klebstoffdimensionierung derart beschaffen und ausgelegt ist, dass sie dauerhaft einer Druckbelastung von mehr als etwa 0,5 bar im Solarpanel standhalten kann.

Insbesondere kann vorgesehen sein, dass das Solarpanel ein Solarpanel nach einem der Ansprüche 1 bis 11 ist.

Außerdem betrifft die vorliegende Erfindung eine Verwendung eines Klebstoffes mit den Merkmalen des Anspruchs 15. Danach ist vorgesehen, dass ein Klebstoff zur Herstellung eines Solarpanels verwendet wird, wobei der Klebstoff gemäß einem der kennzeichnenden Merkmale der Ansprüche 3 bis 8 ausgebildet ist und wobei vorzugsweise das Solarpanel ein Solarpanel nach einem der Ansprüche 1 bis 11 ist.

### Kurze Beschreibung der Zeichnung

Im Folgenden werden anhand der Zeichnungen Ausführungsbeispiele der Erfindung näher erläutert.

Es zeigt:
- Fig. 1: eine schematische Querschnitt-Darstellung eines ersten Ausführungsbeispiels eines erfindungsgemäßen Solarpanels;
- Fig. 2: eine schematische Querschnitt-Darstellung eines zweiten Ausführungsbeispiels eines erfindungsgemäßen Solarpanels;
- Fig. 3a: eine perspektivische Ansicht der Rückseite des zweiten Ausführungsbeispiels des erfindungsgemäßen Solarpanels; und
- Fig. 3b: eine perspektivische Ansicht der Rückseite des ersten Ausführungsbeispiels des erfindungsgemäßen Solarpanels.

Es sind nur die für das unmittelbare Verständnis der Erfindung wesentlichen Elemente gezeigt.

### Weg zur Ausführung der Erfindung

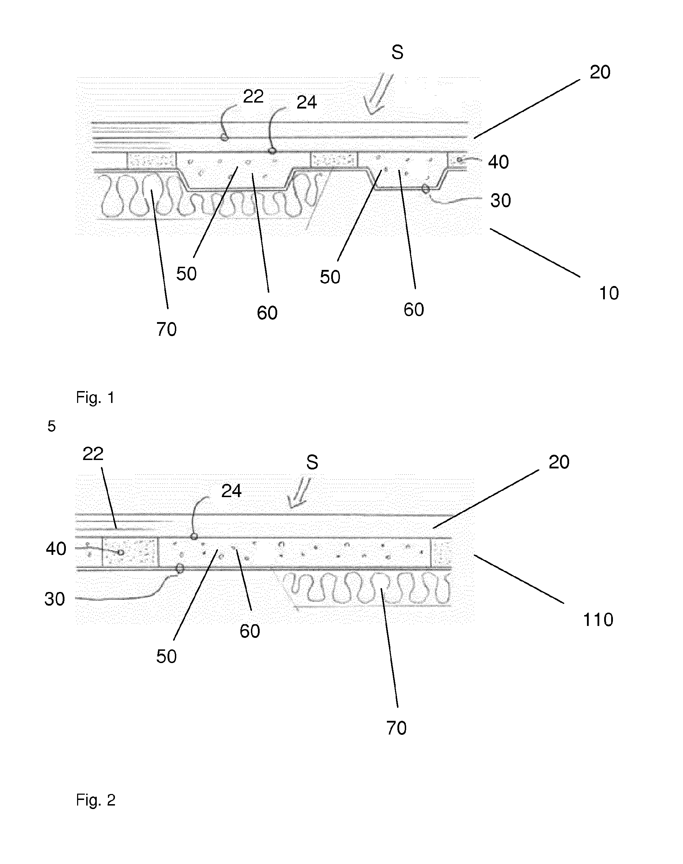

Figur 1 zeigt eine schematische Querschnitt-Darstellung eines ersten Ausführungsbeispiels eines erfindungsgemäßen Solarpanels 10.

Das Solarpanel 10 weist einer ersten wärmeleitenden Platte 20 auf, die für die Bestrahlung mit Sonnenstrahlen S vorgesehen ist. Die Platte 20 ist ferner mit eine zähelastischen VSG-Folie (vergleichbar wie bei Verbundsicherheitsglas) versehen und weist darüber hinaus eine Beschichtung 24 zu Optimierung der Wärmeeintragung und zur Verhinderung der Bestrahlung des Klebstoffes 40 mit UV-Strahlen.

Weiter ist eine zweite Platte 30 vorgesehen, wobei die Platten 20, 30 mittels wenigstens eines Klebstoffes 40 derart verbunden werden, dass der Klebstoff zwischen den beiden Platten wenigstens einen Kanal 50 für ein zwischen den Platten 20, 30 strömendes Wärmeträgermedium 60 ausbildet und wobei Klebstoffdimensionierung derart beschaffen und ausgelegt ist, dass sie dauerhaft einer Druckbelastung von hier mehr als etwa 2,0 bar im Solarpanel 10 standhalten kann.

Um dies zu erreichen, erfüllt der Klebstoff 40 die folgenden Voraussetzungen:

Der Klebstoff 40 ist ein Klebstoff 40 auf Silikonbasis und weist von mindestens etwa 2,0 N/mm² auf. Ferner hat der Klebstoff 40) eine Reißdehnung von mindestens etwa 100 %. Außerdem hat der Klebstoff 40 eine permanente Wärmebeständigkeit von mindestens etwa 150°C und einen Einsatztemperaturbereich im Bereich von etwa -40°C bis etwa 150°C.

Das Solarpanel 10 ist ein kombiniertes Photovoltaik- und Solarthermie-Solarpanel 10. Hierdurch ergibt sich der Vorteil, dass ein höherer Ausnützungsgrad der Sonnenenergie erreicht werden kann, indem der Wirkungsgrad eines Photovoltaikmoduls durch Kühlung erhöht wird und/oder auf derselben Fläche zusätzlich zum (elektrischen) Energiegewinn Wärme gewonnen werden kann. Durch den Betriebsdruck von bis zu 2,0 bar des Wärmeträgermediums 60 kann sehr effizient Wärme von der ersten Platte 20 abgeführt werden, so dass der Wirkungsgrad der Photovoltaikbeschichtung der Platte 20 signifikant erhöht werden kann.

Die zweite Platte 30 ist bereits kanalförmig geprägt. Der Klebstoff 40 bildet die Kanäle 50 im Inneren wie auch die Abdichtung des gesamten Moduls, auch ist er für den Zusammenhalt der beiden zu verbindenden Platten 20, 30 verantwortlich. Unterhalb der zweiten Platte 30 ist eine Isolierung 70 vorgesehen.

Figur 2 zeigt eine schematische Querschnitt-Darstellung eines zweiten Ausführungsbeispiels eines erfindungsgemäßen Solarpanels 110. Das Solarpanel 110 weist dabei dieselben Merkmale wie das in Figur 1 gezeigte Solarpanel 10 auf, wobei jedoch die Platte 30 plan ist und keine eingeprägten Kanalstrukturen aufweist. Im Übrigen ist das Solarpanel 110 identisch mit dem Solarpanel 10 wie vorstehend beschrieben.

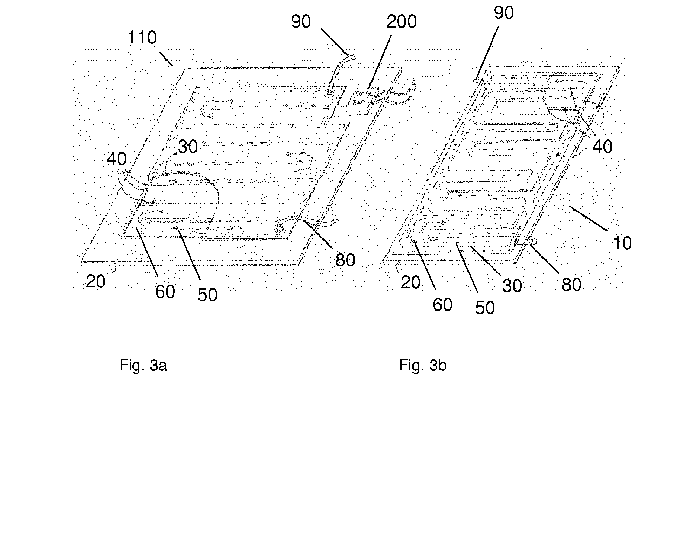

Figur 3a zeigt eine perspektivische Ansicht der Rückseite des zweiten Ausführungsbeispiels des erfindungsgemäßen Solarpanels 110 gemäß Figur 2. Das Wärmeträgermedium 60 fließt durch den Einlauf-Anschluss 80 in den Kanal 50 und tritt durch den Auslauf-Anschluss 90 wieder aus. Auf der Rückseite ist ebenfalls die Solarbox 200 mit dem Stromanschluss eingezeichnet. Figur 3b zeigt analog eine perspektivische Ansicht der Rückseite des ersten Ausführungsbeispiels des erfindungsgemäßen Solarpanels 10 gemäß Figur 1.

Wie aus Figur 3a und 3b ersichtlich ist, werden durch den Klebstoff 40 die Kanäle 50 (bzw. der Kanal 50) derart ausgebildet, dass im Wesentlichen die gesamte Oberfläche der ersten Platte 20 überströmt wird, um die Wärme von der Platte 20 abzuführen, wodurch der Wirkungsgrad der Photovoltaik-Elements erhöht wird. Die Isolierung 70 ist dabei nicht gezeigt.

### Bezugszeichenliste

- 10: Solarpanel (erste Ausführungsform)
- 20: erste wärmeleitende Platte
- 22: VSG-Folie
- 24: Beschichtung
- 30: zweite Platte
- 40: Klebstoff
- 50: Kanal
- 60: Wärmeträgermedium
- 70: Isolierung
- 80: Einlauf-Anschluss
- 90: Auslauf-Anschluss
- 110: Solarpanel (zweite Ausführungsform)
- 200: Solarbox
- S: Sonneneinstrahlung

## Patentansprüche

1. Solarpanel (10, 110), mit wenigstens einer ersten wärmeleitenden Platte (20), die für die Bestrahlung mit Sonnenstrahlen vorgesehen ist, und mit wenigstens einer zweiten Platte (30), wobei die Platten (20, 30) mittels wenigstens eines Klebstoffes (40) derart verbunden werden, dass der Klebstoff zwischen den beiden Platten wenigstens einen Kanal (50) für ein zwischen den Platten (20, 30) strömendes Wärmeträgermedium (60) ausbildet und wobei die Klebstoffdimensionierung derart beschaffen und ausgelegt ist, dass sie dauerhaft einer Druckbelastung von mehr als etwa 0,5 bar im Solarpanel (10, 110) standhalten kann.

2. Solarpanel (10, 110) nach Anspruch 1, **dadurch gekennzeichnet, dass** die Druckbelastung größer als etwa 1,0 bar, insbesondere bis zu wenigstens etwa 2,0 bar beträgt.

3. Solarpanel (10, 110) nach einem der vorhergehenden Ansprüche,
**dadurch gekennzeichnet, dass** der Klebstoff (40) eine Zugfestigkeit von mindestens etwa 1,0 N/mm², weiter beispielsweise eine Zugfestigkeit von mindestens etwa 2,0 N/mm², insbesondere eine Zugfestigkeit von mindestens etwa 2,1 N/mm², vorzugsweise eine Zugfestigkeit von mindestens etwa 2,2 N/mm², besonders vorteilhafterweise eine Zugfestigkeit von mindestens etwa 2,3 N/mm², aufweist.

4. Solarpanel (10, 110) nach einem der vorhergehenden Ansprüche,
**dadurch gekennzeichnet, dass** der Klebstoff (40) eine Reißdehnung von mindestens etwa 100 %, vorzugsweise von mindestens 140 %, aufweist.

5. Solarpanel (10, 110) nach einem der vorhergehenden Ansprüche,
**dadurch gekennzeichnet, dass** der Klebstoff (40) eine permanente Wärmebeständigkeit von mindestens etwa 150°C, vorzugsweise von mindestens etwa 180°C und/oder einen Einsatztemperaturbereich im Bereich von etwa -50 ° bis etwa 200 °C, vorzugsweise von etwa -40 °C bis etwa 150 °C hat.

6. Solarpanel (10, 110) nach einem der vorhergehenden Ansprüche,
**dadurch gekennzeichnet, dass** der Klebstoff (40) ein Klebstoff (40) auf Silikonbasis ist, wobei der Klebstoff (40) insbesondere ein hochfestes Silikon aufweist.

7. Solarpanel (10, 110) nach Anspruch 6, **dadurch gekennzeichnet, dass** der Klebstoff (40) ein 2-komponentiger Silikon-Klebstoff ist, insbesondere ein 2-komponentiger hochmoduliger Silikon-Klebstoff ist.

8. Solarpanel (10, 110) nach Anspruch 6, **dadurch gekennzeichnet, dass** der Klebstoff (40) ein 1-komponentiger Silikon-Klebstoff ist, insbesondere ein 1-komponentiger hochmoduliger Silikon-Klebstoff ist.

9. Solarpanel (10, 110) nach einem der vorhergehenden Ansprüche,
**dadurch gekennzeichnet, dass** das Solarpanel (10, 110) ein kombiniertes Photovoltaik und Solarthermie Solarpanel (10, 110) ist.

10. Solarpanel (10, 110) nach einem der vorhergehenden Ansprüche,
**dadurch gekennzeichnet, dass** die erste Platte (20) eine Floatglasoberfläche und/oder eine Wärmeeintrags-Beschichtung aufweist.

11. Solarpanel (10, 110) nach einem der vorhergehenden Ansprüche,
**dadurch gekennzeichnet, dass** der Klebstoff (40) eine Dicke von etwa 0,01 bis etwa 10 mm aufweist.

12. Solarpanel-Installation mit wenigstens zwei Solarpanels (10, 110) nach einem der vorgehenden Ansprüche.

13. Herstellungsverfahren für ein Solarpanel (10, 110), mit wenigstens einer ersten wärmeleitenden Platte (20), die für die Bestrahlung mit Sonnenstrahlen vorgesehen ist, und mit wenigstens einer zweiten Platte (30), wobei die Platten (20, 30) mittels wenigstens eines Klebstoffes (40) derart verbunden werden, dass der Klebstoff zwischen den beiden Platten wenigstens einen Kanal (50) für ein zwischen den Platten (20, 30) strömendes Wärmeträgermedium ausbildet und wobei Klebstoffdimensionierung derart beschaffen und ausgelegt ist, dass sie dauerhaft einer Druckbelastung von mehr als etwa 0,5 bar im Solarpanel (10, 110) standhalten kann.

14. Herstellungsverfahren nach Anspruch 13, **dadurch gekennzeichnet, dass** das Solarpanel (10, 110) ein Solarpanel (10, 110) nach einem der Ansprüche 1 bis 11 ist.

15. Verwendung eines Klebstoffes (40) zur Herstellung eines Solarpanels (10, 110), wobei der Klebstoff (40) gemäß einem der kennzeichnenden Merkmale der Ansprüche 3 bis 8 ausgebildet ist und wobei vorzugsweise das Solarpanel (10, 110) ein Solarpanel nach einem der Ansprüche 1 bis 11 ist.
